## Europäisches Patentamt
## European Patent Office
## Office européen des brevets

(11) Numéro de publication : **0 031 277**
**B1**

(12) **FASCICULE DE BREVET EUROPÉEN**

(45) Date de publication du fascicule du brevet :
**29.02.84**

(21) Numéro de dépôt : **80401770.5**

(22) Date de dépôt : **10.12.80**

(51) Int. Cl.³ : **B 23 K 20/08**

(54) **Procédé de fabrication de bagues polymétalliques par déformation de gorges et bagues polymétalliques.**

(30) Priorité : **19.12.79 FR 7931125**
**19.12.79 FR 7931126**

(43) Date de publication de la demande :
**01.07.81 Bulletin 81/26**

(45) Mention de la délivrance du brevet :
**29.02.84 Bulletin 84/09**

(84) Etats contractants désignés :
**DE GB SE**

(56) Documents cités :
**DE-A- 2 343 885**
**DE-B- 2 455 608**
**GB-A- 1 575 658**
**US-A- 4 099 661**
**US-A- 4 193 529**

(73) Titulaire : **SOCIETE NATIONALE DES POUDRES ET EXPLOSIFS**
**12, quai Henri IV**
**F-75181 Paris Cedex 04 (FR)**

(72) Inventeur : **Cabrol, Jean-Claude**
**9, rue des Jonquilles**
**F-91130 Ris Orangis (FR)**

Jouve, 18, rue St-Denis, 75001 Paris, France

Procédé de fabrication de bagues polymétalliques par déformation de gorges et bagues polymétalliques

L'invention se rapporte aux procédés de fabrication de bagues polymétalliques notamment destinées au raccordement de tubes en métaux non soudables par les méthodes usuelles à basse énergie.

Pour joindre bout à bout deux tubes métalliques constitués de métaux non soudables entre eux, il a d'abord été fait appel à des solutions d'associations mécaniques telles que des raccords vissés ou des brides. De telles méthodes traditionnelles mais souvent inopportunes sont illustrées, par exemple, par le brevet français 1 515 492.

Lorsqu'il fut découvert qu'il était possible de souder entre eux deux métaux réputés jusque là non soudables l'un à l'autre, en utilisant l'énergie libérée par une explosion, de nombreux procédés de soudage de tubes bout à bout par explosion ont vu le jour. Un premier type de procédé consiste à souder l'extrémité d'un tube dans l'extrémité d'un tube adjacent dans laquelle il doit pouvoir pénétrer. Un tel procédé est illustré, par exemple, par le brevet français 1 550 178. Un second type de procédé consiste à souder par explosion un manchon sur les deux tubes mis bout à bout. Un tel procédé est illustré, par exemple, par les brevets français 2 184 635 et 2 221 230.

L'inconvénient principal de ces procédés est qu'ils ne peuvent être mis en œuvre n'importe où et aussi facilement que le souhaiteraient les utilisateurs des tubes à assembler.

En effet, l'utilisation des explosifs exige la prise de certaines précautions, notamment d'isolement, du fait des nuisances engendrées par l'explosion.

C'est ainsi qu'il a été proposé de souder par les méthodes non explosives les extrémités des deux tubes à assembler sur une bague polymétallique constituée de deux ou plusieurs métaux non soudables par les méthodes usuelles mais soudables l'un au premier tube, l'autre au second. En l'occurrence, la bague polymétallique était obtenue par un procédé par explosion. Ce procédé, décrit par exemple aux pages 76 à 78 du volume 42, n° 11, de Heating, Piping and Air Conditioning de novembre 1970 et, postérieurement, dans les brevets français 2 144 019, 2 231 912 et 2 267 505, consiste à découper une couronne dans une plaque bimétallique ou trimétallique obtenue par placage par explosion. Les bagues polymétalliques ainsi obtenues sont très appréciées mais aussi très coûteuses du fait que la majeure partie de la plaque polymétallique servant au découpage est généralement perdue sous forme de déchets inutilisables. Or, très souvent, des métaux spéciaux et coûteux tels que le zirconium ou le titane sont impliqués dans les bagues polymétalliques.

Il a également été proposé de fabriquer des bagues polymétalliques en mettant en œuvre un procédé comprenant d'une part une première opération d'obtention d'un cylindre composite présentant des gorges et des parties bosselées par déformation au moins partielle vers une enclume de forme générale cylindrique, d'un cylindre polymétallique dont les différentes couches sont issues de cylindres métalliques soudés par une méthode de soudage à haute énergie, et comprenant d'autre part une opération de découpage du cylindre composite bosselé, et une opération d'usinage pour éliminer au moins une partie du bosselage intérieur et/ou extérieur, un tel procédé étant notamment décrit dans la demande de brevet DE-A-2 343 885. Selon ce procédé, les différentes couches du cylindre polymétallique sont rigoureusement cylindriques, et l'obtention du cylindre composite présentant des gorges et des parties bosselées nécessite une enclume qui est de forme générale cylindrique et qui est de révolution, mais dont la surface active présente des gorges de révolution. L'utilisation de méthodes de soudage à haute énergie, telles que le soudage par explosion, impose de réaliser les matrices dans des aciers alliés à hautes caractéristiques qui subissent des traitements de surface, les conditons thermodynamiques de soudage étant particulièrement éprouvantes pour ces matrices. Malgré ces précautions élémentaires, les matrices s'altèrent assez rapidement et doivent être remplacées périodiquement dans le cas de travaux de série, ce qui est précisément le cas pour la fabrication de bagues polymétalliques, et il est donc particulièrement intéressant de disposer d'une matrice de forme simple pour limiter les coûts d'équipement et surtout de remplacement de telles matrices. De plus, dans le cadre de travaux en série, il est également souhaitable de limiter ou de faciliter les usinages de finition des bagues polymétalliques afin de disposer d'un procédé industriel économique.

Le procédé selon l'invention est caractérisé en ce que, d'une part, l'enclume présente une surface active cylindrique lisse, l'obtention du cylindre polymétallique étant effectuée par déformation sur la couche extrême de ce cylindre polymétallique, cette couche étant pourvue de gorges primitives ménagées sur sa face extrême en regard de la surface active cylindrique de l'enclume, et en ce que, d'autre part, l'opération d'usinage est effectuée au moins partiellement immédiatement après l'opération d'obtention du cylindre composite bosselé et avant l'opération de découpage, cette dernière étant effectuée au niveau des gorges primitives et au niveau des parties n'ayant pas subi de déformations notables.

Selon un mode de réalisation préféré du procédé selon l'invention, on utilise un cylindre polymétallique dont les différentes couches ont été soudées par un procédé de soudage par explosion.

Selon un autre mode de réalisation particulièrement préféré du procédé selon l'invention, le procédé est caractérisé en ce qu'on réalise en une seule opération le cylindre polymétallique et le cylindre composite bosselé à partir de cylindres métalliques coaxiaux.

L'un des cylindres métalliques extrêmes étant muni de gorges au moins sur sa face extrême, les autres cylindres métalliques étant des cylindres métalliques de projection. Par faces extrêmes on entend soit la face extérieure pour le cylindre métallique le plus extérieur, soit la face intérieure pour le cylindre métallique le plus intérieur, lesquels cylindres métalliques sont entendus par cylindres métalliques extrêmes.

Selon une variante préférée du mode de réalisation particulièrement préféré précédent, le procédé selon l'invention est caractérisé en ce que, dans une première étape on dispose coaxialement une enclume cylindrique, un cylindre métallique au contact de ladite enclume et muni de gorges sur sa face qui regarde ladite enclume et au moins un autre cylindre métallique de projection et, en ce que, dans une deuxième étape, on provoque le soudage des cylindres métalliques de projection sur le cylindre métallique muni de gorges grâce à une méthode à haute énergie libérant une énergie suffisante pour provoquer aussi au moins la déformation partielle des gorges et pour obtenir un cylindre composite bosselé. Selon cette variante, on usine ensuite le cylindre composite bosselé obtenu pour en éliminer au moins une partie du bosselage intérieur et/ou extérieur, puis on découpe le cylindre composite bosselé obtenu, au niveau des gorges primitives et au niveau des parties n'ayant pas subi de déformations notables. On entend par cylindre, un cylindre de révolution autour d'un axe servant de référence. Toutefois, le procédé selon l'invention n'est pas limité aux cylindres de révolution mais s'applique aussi aux cylindres ayant des sections courbes fermées quelconques ou éventuellement des sections polygonales.

Selon un mode de réalisation générale du procédé selon l'invention, la déformation est totale pour au moins une gorge.

Selon un premier mode de réalisation de la variante préférée du procédé selon l'invention, la méthode à haute énergie libère une énergie suffisante pour provoquer aussi l'écrasement total des gorges. On entend par écrasement total, une déformation telle d'une gorge, qu'une partie au moins de son fond vienne en contact avec l'enclume.

Selon un autre mode de réalisation préféré de la variante du procédé selon l'invention, on utilise lors de la seconde étape, l'énergie libérée par une explosion.

Selon un mode de réalisation général du procédé selon l'invention, l'enclume cylindrique est placée à l'intérieur du cylindre métallique muni de gorges.

Selon encore un autre mode de réalisation général du procédé selon l'invention, le cylindre métallique muni de gorges est placé à l'intérieur de l'enclume cylindrique.

Selon un autre mode de réalisation général du procédé selon l'invention, l'opération de découpage est suivie d'un usinage des bagues découpées complétant l'usinage précédant ladite opération de découpage.

Les gorges dont est muni le cylindre au contact de l'enclume cylindrique ont un profil qui n'est pas forcément constant sur toute leur longueur. Conformément à l'invention il est indifférent que les différentes gorges soient identiques ou différentes les unes par rapport aux autres. Elles peuvent différer certaines par rapport aux autres tant du point de vue de leur profil, que du point de vue de leur profondeur ou de leur largeur. Selon une variante préférée les gorges ont une profondeur sensiblement égale. Selon une variante particulièrement préférée au moins une gorge a une profondeur sensiblement égale à l'épaisseur cumulée des cylindres métalliques de projection.

Selon un autre mode de réalisation du procédé selon l'invention, on n'utilise qu'un seul cylindre métallique de projection. On entend par cylindre métallique de projection un cylindre métallique ayant une dimension légèrement différente de celle du cylindre métallique muni de gorges, de sorte que les parois dudit cylindre muni de gorges et dudit cylindre de projection qui se regardent soient sensiblement équidistantes en tout point. La distance qui sépare ces parois doit obligatoirement être supérieure au minimum requis classiquement dans les opérations de soudage de cylindres concentriques par un procédé à haute énergie. Cette distance doit être d'au moins 25 µm et habituellement est plus forte que cela dans la technique de soudage par explosion. Il est bien entendu que si la technique de soudage par explosion est d'un usage préféré dans le cadre de l'invention, on peut utiliser toute technique permettant de souder en mettant en œuvre une haute énergie, au moins deux métaux réputés non soudables par les méthodes usuelles. On peut ainsi utiliser éventuellement le magnétoformage ou l'hydroélectroformage, par exemple, c'est-à-dire tout procédé de soudage à haute pression dynamique. Le critère d'équidistance entre le premier cylindre de projection et le cylindre muni de gorges vaut également pour les éventuels autres cylindres de projection, c'est-à-dire dans le cas de bagues au moins trimétalliques.

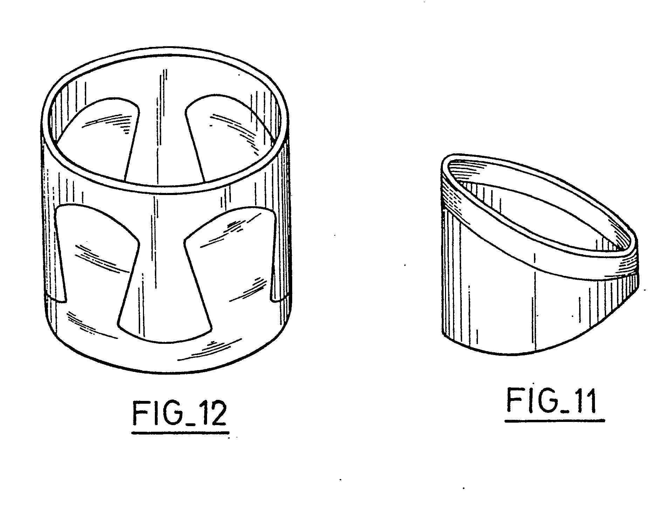

L'invention concerne aussi, à titre de produits, les bagues polymétalliques substantiellement représentées aux figures 11 et 12. Ces bagues polymétalliques sont du type renfermant au moins une zone de soudure obtenue par une méthode de soudage à haute énergie et affectant la forme d'une nappe tronquée selon deux plans non parallèles à l'axe de la bague. Une première bague selon l'invention est caractérisée en ce que l'intervalle de soudure est tel que sa trace sur au moins un cylindre coaxial avec la bague et passant dans son épaisseur est une ellipse. Selon une variante préférée de cette bague, ses extrémités sont contenues dans des plans sécants obliques par rapport à l'axe de la bague. Cette variante est celle représentée à la figure 11. Une seconde bague selon l'invention est caractérisée en ce que l'interface de soudure est tel que sa trace sur au moins un cylindre coaxial avec la bague et passant dans son épaisseur est une indentation en méandres. Une telle bague est illustrée à la figure 12.

Les avantages obtenus grâce à cette invention consistent essentiellement en ce que la matrice présente une forme particulièrement simple à usiner et dont la résistance à l'usure et au matage est beaucoup plus élevée que la résistance d'une matrice de forme présentant des gorges ou des cannelures. Les coûts de fabrication et de remplacement d'une telle matrice sont donc plus limités et la combinaison de cet avantage avec l'usinage plus rapide des bagues polymétalliques en effectuant un cylindrage immédiatement après l'opération d'obtention du cylindre composite bosselé, permet d'obtenir un procédé de fabrication de bagues polymétalliques particulièrement efficace et peu onéreux.

L'invention va maintenant être décrite d'une manière plus détaillée en faisant référence aux figures 1 à 10 (coupes axiales) et 11 et 12 (vues en perspective).

La figure 1 représente un montage correspondant à la première étape de la variante du mode de réalisation préféré du procédé selon l'invention, dans le cas de bagues bimétalliques et de l'emploi de l'énergie libérée par une explosion.

La figure 2 représente un cylindre composite bosselé selon l'invention.

La figure 3 représente le cylindre composite précédent, après usinage.

La figure 4 représente des bagues bimétalliques cylindriques obtenues à l'issue du procédé selon l'invention.

La figure 5 représente un montage selon la première étape de la variante préférée du procédé selon l'invention, dans le cas de bagues trimétalliques et d'une enclume extérieure.

La figure 6 représente le cylindre composite bosselé obtenu après mise à feu du montage de la figure 5.

La figure 7 représente les bagues trimétalliques obtenues à l'issue du procédé, par découpage du cylindre de la figure 6 puis usinage.

La figure 8 représente un montage selon la version générale du procédé, chemisage d'un cylindre par un procédé à haute énergie, en l'occurence celle d'une explosion.

La figure 9 représente le cylindre bimétallique obtenu après mise à feu du montage selon la figure 8.

La figure 10 représente le montage permettant d'obtenir le cylindre de la figure 2, à partir du formage du cylindre de la figure 9, préalablement usiné.

La figure 11 représente une bague selon l'invention ayant un profil en ellipse et permettant de raccorder des tubes dont les axes font un certain angle entre eux.

La figure 12 représente une bague selon l'invention ayant un profil en méandres et une résistance mécanique très accrue.

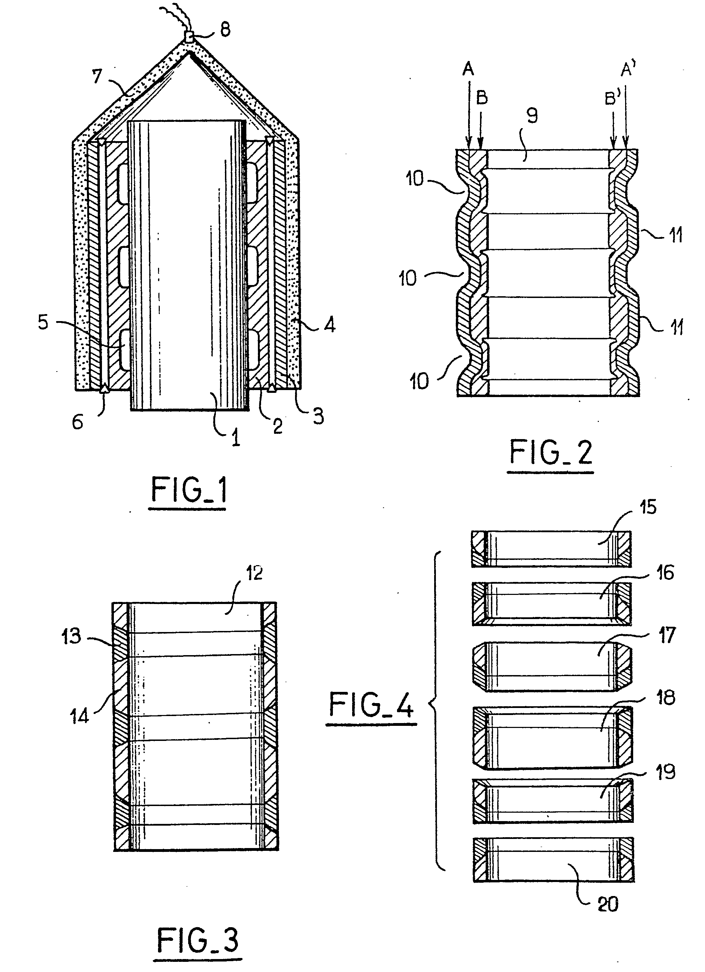

Dans les figures 1 à 4 on a représenté le montage et les pièces obtenues au terme des quatre étapes du procédé selon l'invention, dans le cas de la fabrication de bagues bimétalliques.

L'enclume 1 est un cylindre métallique plein lequel s'emmanche à contact dans le cylindre métallique 2 muni de gorges 5, au nombre de trois. Le cylindre de projection 3 est, dans le cas le plus intéressant, en un métal non soudable au métal constituant le cylindre 2, à l'aide des méthodes usuelles à faible énergie. Le cylindre 3 a un diamètre intérieur légèrement supérieur au diamètre extérieur du cylindre 2. Un manchon d'explosif 4 est placé au contact de la face extérieure du cylindre 3. Ce manchon est amorcé par un générateur d'onde plane 7 lui-même amorcé par un détonateur 8.

L'enclume 1 est de préférence du type facilement démontable, éventuellement constituée de plusieurs pièces, ou encore est en un matériau fusible ou combustible, pas forcément métallique, ou encore est en un métal chimiquement ou électrochimiquement destructible tel que l'aluminium. Sa surface extérieure peut être traitée, de manière connue, de façon à faciliter son extraction ou de façon à éviter qu'au cours de la seconde étape, le fond des gorges 5 vienne s'y souder.

Le cylindre métallique 2 est muni de gorges 5 qui sont ici identiques quant à leur profondeur, leur largeur et leur profil. Il pourrait tout aussi bien en être autrement sans sortir du cadre de l'invention. La profondeur des gorges 5 a été choisie, dans le cas particulier représenté, égale à l'épaisseur du cylindre 3. Ce dernier est maintenu à une distance à peu près uniforme du cylindre 2 à l'aide de cales 6. Le manchon d'explosif 4 est placé soit directement au contact du cylindre 3 avec, ou non, interposition d'une ou plusieurs couches cylindriques de matériaux inertes. Le générateur d'onde 7 et l'amorce 8 sont des organes bien connus en matière de chemisage de tube par explosion. Les conditions énergétiques retenues pour la réalisation du procédé sont avantageusement celles requises pour le soudage par explosion du cylindre 3 sur le cylindre 2 supposé non muni de gorges. Les paramètres d'exécution du manchon 4 apparaîtront clairement à l'homme du métier qui sait qu'il doit tenir compte notamment de la nature des matériaux constituant les cylindres 2 et 3, de l'épaisseur du cylindre 3 et des diamètres relatifs des cylindres 2 et 3. Les caractéristiques mécaniques du métal constituent le cylindre 3 influent aussi comme on sait sur l'intervalle séparant les pièces à souder.

La mise à feu du montage représenté à la figure 1 ayant eu lieu, on obtient après élimination de l'enclume 1, par démontage ou dissolution chimique par exemple, le cylindre composite 9 représenté à la figure 2. Au niveau des gorges primitives 5, on obtient des creux 10 par opposition aux parties n'ayant pas subi de déformations notables 11 qui leur sont adjacentes.

La figure 3 représente le cylindre composite 12 obtenu au terme de la troisième étape du procédé selon l'invention, à partir du cylindre 9. Le cylindre 12 a été obtenu en supprimant dans le cylindre 9, la totalité du bosselage intérieur et du bosselage extérieur, c'est-à-dire en éliminant les parties métalliques situées à l'extérieur du cylindre de diamètre AA' et à l'intérieur du cylindre de diamètre BB' de la figure 2. On voit que le cylindre 12 est formé d'une succession de portions de cylindres métalliques 13 et 14 en alternance, soudées par explosion dans un plan non perpendiculaire à l'axe dudit cylindre 12.

La figure 4 représente les bagues bimétalliques 15 à 20 obtenues après découpage du cylindre 12 conformément à l'ultime étape du procédé selon l'invention. On voit que le découpage a été effectué ici perpendiculairement ou tronconiquement par rapport à l'axe. Le découpage tronconique permet d'augmenter la surface de soudage entre le tube à raccorder et la bague. Lorsqu'une surface de soudure importante est souhaitée, on peut aussi très facilement satisfaire ce souhait, au contraire des méthodes antérieures. Il suffit en effet de pratiquer un découpage oblique de manière à obtenir un interface elliptique. On peut également dans la même perspective pratiquer un découpage sinusoïdal ou en dents de scie. On appréciera qu'à l'aide du découpage oblique on peut obtenir des bagues permettant de raccorder des tubes dont les axes forment un certain angle. Ainsi, sans perte de matière, on peut découper le cylindre 12 selon des plans faisant alternativement 62°30' et 112°30' avec l'axe du cylindre : on obtient alors six bagues bimétalliques permettant de souder entre eux des tubes constitués des mêmes métaux que ceux constituant les parties 13 et 14, lesdits axes des tubes faisant entre eux un angle droit.

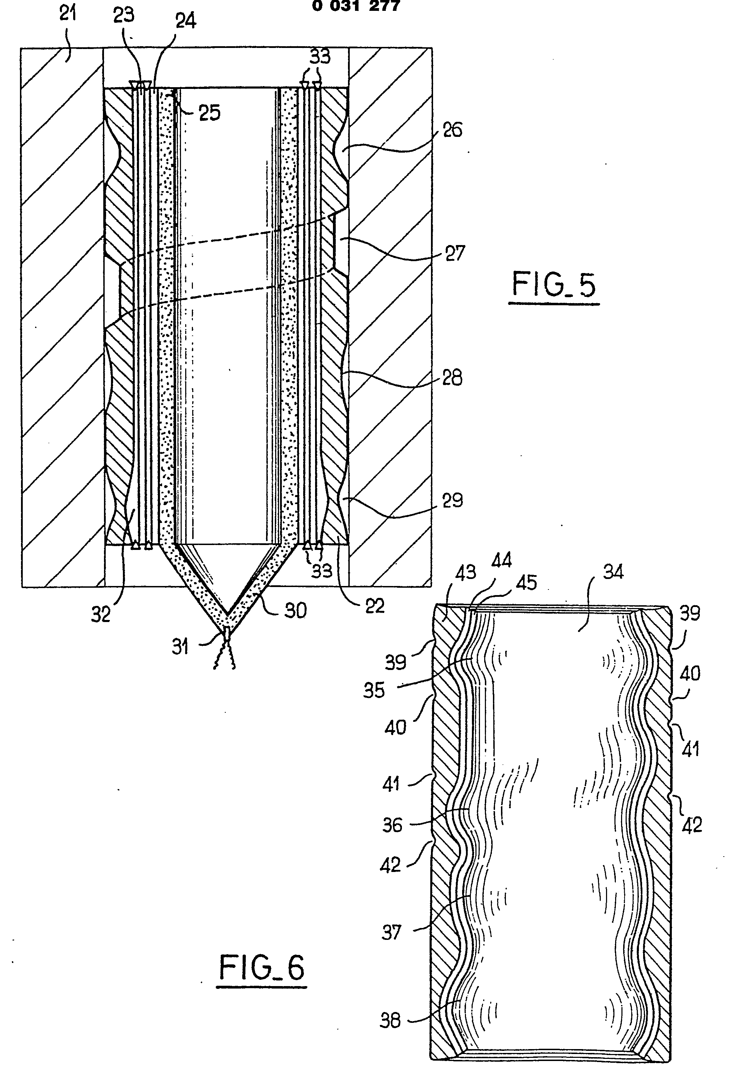

La figure 5 représente la disposition obtenue au terme de la première étape selon le procédé dans le cas où des bagues trimétalliques sont recherchées. Le cylindre 22 muni de gorges 26, 27, 28 et 29 a été glissé à l'intérieur de l'enclume 21 démontable, constituée de deux demi-coquilles. Deux cylindres 23 et 24 de projection sont placés à l'intérieur du cylindre 22. Un manchon d'explosif 25 repose contre la face intérieure du cylindre 24 le plus intérieur. Ce manchon est amorcé à l'aide du générateur d'onde plane 30 lui-même amorcé par le détonateur électrique 31. Dans ce type de montage le soudage-formage est réalisé par expansion et non plus par rétreint comme montré à la figure 1. Dans l'un et l'autre cas on peut également opérer sous vide.

Le cylindre 22 est muni de trois gorges 26, 28 et 29 qui sont de révolution. La profondeur de la gorge 26 est égale à la somme des épaisseurs des cylindres de projection 23 et 24. En revanche la gorge 28 a une profondeur sensiblement inférieure à ladite somme des épaisseurs des cylindres 23 et 24. La gorge 29 a ceci de particulier qu'elle est située au niveau d'une gorge 32, de révolution, pratiquée à l'intérieur du cylindre 22. Cette gorge 32 a une profondeur qui, cumulée avec celle de la gorge 29 atteint une valeur supérieure à la somme des épaisseurs des cylindres 23 et 24. La gorge 27 est particulière en ce qu'elle n'est pas de révolution. Son profil est en auge à fond plat. L'ensemble des points milieux de son fond est une ellipse située dans un plan incliné par rapport à l'axe du montage. Elle peut donner naissance, à la fin du procédé, à une bague à zone soudée oblique et à trace elliptique du type représenté à la figure 11.

Des cales 33 permettent le centrage des cylindres de projection. Il est à noter que la coaxialité des cylindres de projection et du cylindre muni de gorges n'est pas, selon l'invention, une condition impérative : un léger décalage des axes est acceptable dans le cadre général du chemisage par explosion.

Il reste que la règle préférée est la coaxialité des éléments du montage et qu'on utilise de préférence des cylindres de projection d'épaisseur constante, bien qu'encore on ne sortirait pas du procédé selon l'invention en utilisant des cylindres de projection d'épaisseur non uniforme ou des troncs de cône.

Par ailleurs, on peut parfaitement remplacer le manchon d'explosif 25 par un cordeau détonant ou une colonne d'explosif disposé axialement et placer un liquide, tel que de l'eau, dans l'intervalle séparant l'axe et le cylindre 24.

Sur la figure 6, on a représenté le cylindre composite bosselé 34 obtenu après mise à feu de l'explosif dans le montage représenté à la figure 5. Dans ce cylindre 34 les gorges intérieures 35, 36, 37 et 38 ont été obtenues indirectement grâce aux déformations qu'impliquait la déformation des gorges 26 à 29 lors du soudage par explosion des cylindres 23 et 24 sur la face intérieure du cylindre 22. Dans le cas représenté la profondeur et le profil des gorges 26 et 27 ont causé l'apparition de gorges résiduelles 39, 40, 41 et 42 de faible dimension comparé aux dimensions initiales des gorges 26 et 27. La présence de ces gorges résiduelles n'affecte pas la réussite du procédé qui comprend le cas où le fond des gorges 26, 27, 28 et/ou 29 ne serait pas suffisamment déformé pour venir toucher la paroi de l'enclume 21. Dans le cylindre 34 représenté les différentes couches métalliques 43, 44 et 45 sont soudées les unes aux autres : les zones de soudure présentent de préférence un faciès « en vaguelettes » caractéristique des procédés de soudage à haute énergie.

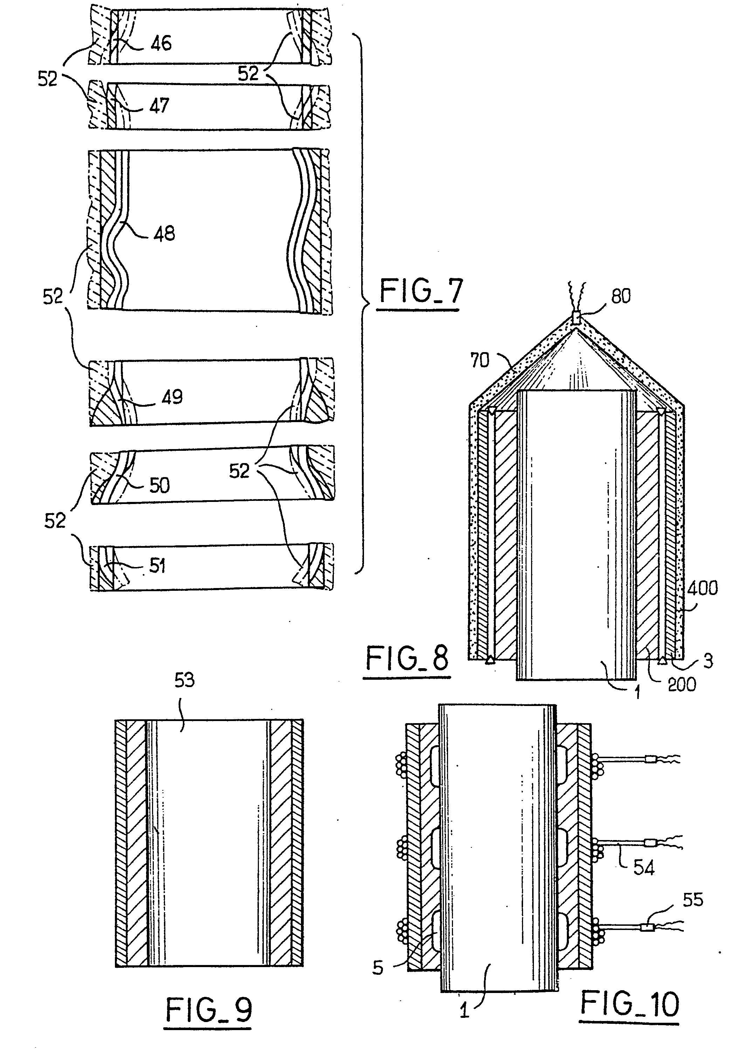

La figure 7 représente les bagues obtenues après découpage du cylindre 34 et usinage subséquent. Dans le cas la troisième étape éventuelle du procédé n'a pas été appliquée et l'usinage déterminant le type final de la bague a été effectué qu'après le découpage. Les bagues 46 et 47 sont du type cylindrique trimétallique et permettent de raccorder des tubes constitués des métaux 43 et 45, de mêmes diamètres. La bague 48 permet soit de raccorder des tubes en un des métaux 43, 44 ou 45 de même diamètre, soit un tube en un des métaux 43, 44 ou 45 avec un tube d'un autre de ces métaux de diamètre différent, soit encore des tubes ayant des axes faisant un certain angle entre eux, l'un en métal 22, l'autre en métal 23 puisqu'on peut obtenir, à partir de 48, une bague représentée à la figure 11 par usinage intérieur et extérieur puis tronçonnage oblique. Le profil asymétrique de cette bague 48 la rend particulièrement utile pour la réalisation de jonctions soumises à des contraintes ou à des vibrations. La bague 49 permet de souder un tube en métal 45 avec un tube en métal 43 avec un grand choix de diamètres et d'épaisseurs pour ce dernier. La bague 50 permet de raccorder en métal 44 ou 45 avec un tube en métal 43 ou 44 de plus grand diamètre. La bague 51 permet de raccorder un tube en métal 44 ou 45 avec un tube en métal 43 de même diamètre. Dans la figure 7 les parties figurées en trait léger représentent les parties éliminées lors de l'usinage des bagues 46 et 51.

On appréciera l'extrême souplesse du procédé selon l'invention qui permet d'obtenir très facilement des bagues présentant, une grande polyvalence au niveau de la nature des tubes raccordables, une grande variété de profils internes, une grande variété dans les diamètres et une étanchéité réglable améliorée au niveau de la zone de soudure interne à la bague. En effet, à ce dernier propos, on voit qu'on obtient dans une bague d'épaisseur donnée une zone soudée d'autant plus étendue que la gorge qui lui a donné naissance est moins profonde, puisque de cette profondeur dépend la profondeur des gorges obtenues à l'intérieur du cylindre composite.

Cette qualité au niveau du joint peut être très avantageusement exploitée en conférant au bord de la gorge un profil en méandres : une telle bague est représentée à la figure 12. Cette bague est caractérisée en ce que l'interface de soudure y est tel que sa trace sur un cylindre coaxial passant par son épaisseur, est une indentation en méandres. Une telle bague offre l'avantage d'une grande solidité mécanique en statique comme en fatigue due à la surface élevée de l'interface de soudure et à l'imbrication des indentations.

On peut aussi utiliser dans le procédé selon l'invention un cylindre muni de gorges ou des cylindres de projection qui soient composites, c'est-à-dire hétérogènes, ce qui permet, en une seule application du procédé à haute énergie, d'obtenir finalement des bagues d'une plus grande variété. On peut aussi utiliser un cylindre de projection moins long que le cylindre muni de gorges ou que les autres cylindres de projection de sorte qu'on obtienne des bagues comportant de l'une à l'autre des métaux différents.

Les métaux utilisables dans le cadre de l'invention sont non seulement les métaux soudables entre eux par les méthodes usuelles à basse énergie mais encore les métaux soudables entre eux uniquement par un procédé à haute énergie.

Les autres avantages du procédé selon l'invention sont notamment la possibilité d'obtenir un grand nombre de bagues de qualité égale en une seule opération, la possibilité d'obtenir des bagues de grande longueur, la diminution notable des pertes de matériaux lors de la confection des bagues, l'amélioration de l'homogénéité de la soudure entre les métaux constituant les bagues et la simplification des opérations d'usinage nécessaires à l'obtention des bagues.

Sur les figures 8 à 10 on voit représentés les trois stades permettant d'atteindre le cylindre composite bosselé 9 de la figure 2 par le procédé selon l'invention pris dans sa forme la plus générale, qui est aussi la plus laborieuse.

Sur la figure 8 on distingue l'enclume démontable 1, un cylindre métallique 200 au contact de l'enclume 1, un cylindre métallique 3, de projection, maintenu équidistant du cylindre 200 à l'aide de cales 6 et un manchon d'explosif 400 permettant d'assurer le soudage par explosion du cylindre 3 sur le cylindre 200. Ce manchon 400 est amorcé par un générateur d'onde 70 et un détonateur 80. Après mise à feu de l'explosif 400, puis extraction de l'enclume 1, on obtient le cylindre polymétallique 53 représenté à la figure 9. La figure 10 représente le montage ultime permettant d'obtenir le cylindre 9 de la figure 2. Le cylindre polymétallique 53 a été usiné de façon à y pratiquer des gorges 5 identiques à celles représentées à la figure 1. Toutefois, on peut tout aussi bien pratiquer des gorges plus profondes, entamant même la couche adjacente, notamment dans le cas où plus de deux couches métalliques sont impliquées. On a replacé l'enclume 1 et disposé des spires de cordeaux détonants 54 autour du cylindre 53 au niveau des gorges 5. La détonation de ces cordeaux amorcée par les dispositifs l'amorçage 55, simultanément ou successivement, provoque l'écrasement des gorges 5 et l'obtention du cylindre composite bosselé 9. A la place des cordeaux on peut utiliser tout autre moyen connu pour réaliser la déformation décrite, développant une pression suffisante. Le procédé selon l'invention, dans sa forme générale, fonctionne aussi bien en expansion. Ainsi le cylindre 34 de la figure 6 peut être obtenu en réalisant d'abord le soudage par explosion des cylindres métalliques 23 et 24 sur le cylindre 22 non munis des gorges 26 à 29, puis, après avoir démonté l'enclume 21, en pratiquant lesdites gorges 26 à 29 et, finalement, après remontage de l'enclume 21, en créant une pression à l'intérieur du cylindre polymétallique obtenu, telle que les gorges 26 à 29 s'écrasent et qu'on obtienne le cylindre composite bosselé 34. On peut ainsi utiliser à l'intérieur du cylindre un liquide incompressible pour transmettre la pression engendrée par une presse mécanique ou par l'explosion d'une charge d'explosif disposée axialement. La gorge intérieure 38 peut être obtenue aussi bien en pratiquant la gorge 32 sur le cylindre 22 avant soudure des cylindres 23 à 24, puis en pratiquant comme dit, la gorge 29, avant le formage final, ou en utilisant un cylindre 22 exempt de toutes gorges et en pratiquant avant le formage final, une gorge 29 ayant une profondeur augmentée, par rapport à celle représentée à la figure 5, de la profondeur de la gorge 32 de la même figure. L'enclume 21 démontable peut être par exemple constituée en quatre parties : un noyau central tronconique aisément extractible, une pièce extractible par la cavité laissée après extraction dudit noyau, laquelle pièce libère à son tour deux quasi demi-coquilles.

Exemple

Le procédé selon l'invention a été utilisé pour fabriquer des bagues bimétalliques destinées à joindre des tubes en acier inoxydable en zircaloy 2.

La variante utilisée est celle où l'on réalise en une seule opération le cylindre polymétallique et le cylindre composite bosselé à partir de cylindres métalliques coaxiaux, le cylindre métallique extérieur étant muni de gorges sur sa face extérieure et étant placé au contact d'une enclume cylindrique extérieure.

L'enclume cylindrique extérieure est constituée en trois parties : tout d'abord une frette extérieure cylindrique de 420 mm de diamètre, de 852 mm de hauteur, munie d'un alésage de forme tronconique ayant une petite base de 195 mm et un angle au sommet de 5° ; les deux autres parties sont identiques et sont deux demi-coquilles dont la réunion forme un tronc de cône de 852 mm de hauteur, ayant une grande base de 269,4 mm de diamètre, une petite base de 195 mm de diamètre et muni d'un alésage axial cylindrique de 75 mm de diamètre. Toutes ces pièces sont constituées an Acier Maraging® Z 2 NKDT 18-10-5 traité pour présenter une limite élastique de 194 hbar.

Le cylindre muni de gorges, était en Zircaloy 2, avait une hauteur de 851,6 mm, un diamètre intérieur de 55 mm et un diamètre extérieur de 75 mm. Les gorges, au nombre de 6, étaient de révolution et avaient un profil en auge : le fond plat des gorges avait 50 mm de longueur et leurs flancs s'inclinaient de 15°. Les entregorges mesuraient 50 mm. La profondeur des gorges était de 4,5 mm.

Le cylindre métallique de projection était un cylindre disposé et calé coaxialement par rapport au précédent, de longueur 851,6 mm, de 50 mm de diamètre extérieur et de 4 mm d'épaisseur. Il était en Acier Inoxydable austénitique Z 2 CN 18-10 conformément aux spécifications. L'axe du montage étant vertical, on a disposé à l'intérieur du cylindre de projection précédent et au contact de la paroi interne de ce dernier, un manchon d'explosif de 860 mm de longueur et de 13 mm d'épaisseur. L'explosif était un explosif composite ayant une vitesse de détonation de 2 500 m/s et une densité de 4,2 g/cm³ (à base pentrite dans un liant élastomère, chargée de poudre de tungstène).

L'amorçage de l'explosif était assuré par un cône d'angle au sommet 80°, du même explosif composite, comme représenté substantiellement à la figure 1, et par un détonateur électrique à 0,6 g de pentrite. Le montage était disposé sur des cales de bois, grande base de l'alésage de la frette tronconqiue dirigée vers le haut ; le cylindre muni de gorges coulissait juste à l'intérieur de l'enclume.

Après mise à feu de l'explosif, le tronc de cône formé de deux demi-coquilles s'est laissé facilement extraire et on a obtenu un cylindrique composite bosselé tel que toutes les gorges initiales du cylindre en zirconium avaient été totalement écrasées.

On a alors procédé à l'élimination du bosselage extérieur du cylindre composite bosselé obtenu : les parties éliminées sont celles possédant un diamètre supérieur à 64 mm. On a obtenu ainsi un cylindre composite « bosselé » usiné, lisse, extérieur comme représenté substantiellement à la figure 3, mais comportant six successions des zones 13 et 14. On a ensuite procédé au découpage du tube précédent par des plans perpendiculaires à son axe, au niveau des gorges et entregorges primitives. On a obtenu ainsi douze bagues bimétalliques dont on a achevé l'usinage en éliminant toutes les parties intérieures de diamètre inférieur à 56 mm. On a obtenu douze bagues bimétalliques du type 15 ou 20 représentées à la figure 4.

Ces bagues présentaient un coefficient de joint supérieur à 4, c'est-à-dire que la zone soudée avait une largeur minimale environ quatre fois plus importante que dans les bagues de mêmes dimensions obtenues par le procédé ancien, par découpage de couronnes dans une plaque bimétallique. Dans ces dernières, le coefficient de joint n'est que de 1, puisque la zone soudée et égale à l'épaisseur de la bague. Les dimensions moyennes des bagues obtenues étaient les suivantes : diamètre extérieur 64 mm, épaisseur 4 mm, hauteur 91,3 mm (pour la première et la dernière bague) et 35,8 mm à 131,6 mm selon le plan de coupe, pour les autres bagues.

L'étude métallurgique destructive de la deuxième, de la cinquième et de la douzième bague par rapport au côté d'amorçage indique que pour toutes ces bagues l'interface entre l'acier inoxydable et le zircaloy 2 est entièrement soudé et présente un faciès de soudure typique de la méthode de soudage par explosion. La résistance à la rupture de la soudure a une valeur intermédiaire entre celles respectivement de l'acier inoxydable et du zircaloy 2 utilisés.

On appréciera que la profondeur des gorges était sensiblement égale à l'épaisseur du cylindre bosselé diminuée de la valeur de l'épaisseur du cylindre de projection en inox. On appréciera également que l'obtention de bagues selon le procédé selon l'invention, aurait nécessité, par le procédé antérieur de souder des plaques d'acier inoxydable et de zircaloy de 5 à 10 cm d'épaisseur.

**Revendications**

1. Procédé de fabrication de bagues polymétalliques (15-20) comprenant d'une part une première opération d'obtention d'un cylindre composite présentant des gorges (10) et des parties bosselées (11) par déformation au moins partielle vers une enclume de forme générale cylindrique, d'un cylindre polymétallique dont les différentes couches sont issues de cylindres métalliques soudés par une méthode de soudage à haute énergie, et comprenant d'autre part une opération de découpage du cylindre composite bosselé, et une opération d'usinage pour éliminer au moins une partie du bosselage intérieur et/ou extérieur, caractérisé en ce que, d'une part l'enclume (1 ; 21) présente une surface active cylindrique lisse, l'obtention du cylindre polymétallique étant effectuée par déformation sur la couche extrême (2 ; 22) de ce cylindre polymétallique, cette couche étant pourvue de gorges primitives (5 ; 26-29) ménagées sur sa face extrême en regard de la surface active cylindrique de l'enclume, et en ce que, d'autre part, l'opération d'usinage est effectuée au moins partiellement immédiatement après l'opération d'obtention du cylindre composite bosselé (9 ; 34) et avant l'opération de découpage, cette dernière étant effectuée au niveau des gorges primitives (5 ; 26-29) et au niveau des parties n'ayant pas subi de déformations notables (11).

2. Procédé selon la revendication 1, caractérisé en ce qu'on utilise un cylindre polymétallique (53, 5) dont les différentes couches ont été soudées par une méthode de soudage par explosion.

3. Procédé selon l'une quelconque des revendications 1 ou 2, caractérisé en ce que le cylindre polymétallique (22, 23, 24) muni de gorges est placé à l'intérieur de l'enclume cylindrique (21).

4. Procédé selon l'une quelconque des revendications 1 ou 2, caractérisé en ce que l'enclume cylindrique (1) est placée à l'intérieur du cylindre polymétallique (2, 3) muni de gorges.

5. Procédé selon l'une quelconque des revendications précédentes, caractérisé en ce qu'au moins une gorge (5) a une profondeur sensiblement égale à l'épaisseur cumulée des cylindres métalliques de projection.

6. Procédé selon l'une quelconque des revendications précédentes, caractérisé en ce qu'on réalise en une seule opération le cylindre polymétallique et le cylindre composite bosselé (9 ; 34) à partir de cylindres métalliques coaxiaux, (2, 3 ; 22, 23, 24) le cylindre métallique extrême (2 ; 22) étant muni de gorges (5 ; 26-29) au moins sur sa face extrême, les autres cylindres (3 ; 23, 24) métalliques étant des cylindres métalliques de projection.

7. Procédé selon la revendication 6, caractérisé en ce que, dans une première étape, on dispose coaxialement une enclume cylindrique (1 ; 21), un cylindre métallique (2 ; 22) au contact de ladite enclume et muni de gorges sur sa face qui regarde ladite enclume cylindrique, et au moins un autre cylindre (3 ; 23) métallique de projection et en ce que, dans une deuxième étape, on provoque le soudage des cylindres métalliques de projection sur le cylindre métallique muni de gorges grâce à une méthode de soudage à haute énergie libérant une énergie suffisante pour provoquer aussi au moins la déformation partielle des gorges et obtenir un cylindre composite bosselé (9 ; 34).

8. Procédé selon l'une quelconque des revendications précédentes, caractérisé en ce que l'opération de découpage est suivie d'un usinage des bagues découpées complétant l'usinage précédent ladite opération de découpage.

9. Procédé selon l'une quelconque des revendications précédentes, caractérisé en ce que la déformation est totale pour au moins une gorge.

10. Bague polymétallique renfermant au moins une zone de soudure obtenue par une méthode de soudage à haute énergie et affectant la forme d'une nappe tronquée selon deux plans non parallèles à l'axe de la bague, caractérisée en ce que l'intervalle de soudure (fig. 11) est tel que sa trace sur au moins un cylindre coaxial avec la bague et passant dans son épaisseur est une ellipse.

11. Bague selon la revendication 10, caractérisée en ce que ses extrémités sont contenues dans des plans sécants obliques (fig. 11) par rapport à l'axe de la bague.

12. Bague polymétallique renfermant au moins une zone de soudure obtenue par une méthode de soudage à haute énergie et affectant la forme d'une nappe tronquée selon deux plans non parallèles à l'axe de la bague, caractérisée en ce que l'interface de soudure (fig. 12) est tel que sa trace sur au moins un cylindre coaxial avec la bague et passant dans son épaisseur est une indentation en méandres.

13. Bague polymétallique selon l'une quelconque des revendications 10 à 12, caractérisée en ce que la zone de soudure est une zone de soudure par explosion.

**Claims**

1. Process for the manufacture of rings (15-20) consisting of more than one metal, comprising on the one hand a first operation to obtain a composite cylinder having grooves (10) and indented parts (11) by at least partial deformation against an anvil of generally cylindrical form of a cylinder consisting of more than one metal, the different layers of said cylinder being derived from metal cylinders welded by a high-energy welding method, and comprising on the other hand an operation for parting-off the indented composite cylinder, and a machining operation to eliminate at least some of the internal and/or external indentation, characterised in that on the one hand the anvil (1 ; 21) has a smooth cylindrical active surface, the obtaining of the cylinder consisting of more than on metal being carried out by deformation of the extreme layer (2 ; 22) of said cylinder, said extreme layer being provided with original grooves (5 ; 26-29) formed on the extreme surface with respect to the cylindrical active surface of the anvil, and in that on the other hand, the machining operation is at least partially carried out immediately after the operation of obtaining the indented composite cylinder (9 ; 34) and before the parting-off, the latter being carried out at the position corresponding to the original grooves (5 ; 26-29) and at the position of the parts which have not been subjected to appreciable deformations (11).

2. Process according to claim 1, characterised in that a cylinder (53, 5) consisting of more than one metal is used, the different layers of this cylinder having been welded by an explosion-welding method.

3. Process according to either of claims 1 or 2, characterised in that the cylinder (22, 23, 24) consisting of more than one metal, which is provided with grooves, is placed inside the cylindrical anvil (21).

4. Process according to either of claims 1 or 2, characterised in that the cylindrical anvil (1) is placed inside the cylinder (2,3) consisting of more than one metal, which is provided with grooves.

5. Process according to any one of the preceding claims, characterised in that at least one groove (5) has a depth approximately equal to the combined thickness of the metal cylinders of projection.

6. Process according to any one of the preceding claims, characterised in that the cylinder consisting of more than one metal and the indented composite cylinder (9 ; 34) are produced in a single operation, starting from coaxial metal cylinders (2, 3 ; 22, 23, 24), the extreme metal cylinder (2 ; 22) being provided with grooves (5 ; 26-29), at least on its extreme surface, and the other metal cylinders (3 ; 23, 24) being metal cylinders of projection.

7. Process according to claim 6, characterised in that, in a first stage, a cylindrical anvil (1 ; 21) is arranged coaxially with a metal cylinder, (2 ; 22), the latter being in contact with the said anvil and being provided with grooves on its surface facing the said anvil, and with at least one other metal cylinder of projection (3 ; 23), and in that, in a second stage, the welding of the metal cylinders of projection onto the metal cylinder which is provided with grooves is brought about with the aid of a high-energy method, liberating sufficient energy also to bring about at least the partial deformation of the grooves and to obtain an indented composite cylinder (9 ; 34).

8. Process according to any one of the preceding claims, characterised in that the parting-off operation is followed by a machining operation on the rings which have been parted off, this machining operation completing the machining operation which precedes the said parting-off operation.

9. Process according to any one of the preceding claims, characterised in that the deformation is total in the case of at least one groove.

10. Ring consisting of more than one metal, this ring enclosing at least one weld-zone obtained by a high-energy welding method and taking the form of a sheet which is cut off along two planes which are not parallel to the axis of the ring, characterised in that the weld interface (fig. 11) is such that it traces an ellipse on at least one cylinder which is coaxial with the ring and passes within its thickness.

11. Ring according to claim 10, characterised in that its ends are contained within secant planes (Fig. 11), which are oblique in relation to the axis of the ring.

12. Ring consisting of more than one metal, this ring enclosing at least one weld-zone obtained by a high-energy welding method and taking the form of a sheet which is cut off along two planes which are not parallel to the axis of the ring, characterised in that the weld interface (fig. 12) is such that it traces a sinuous indentation on at least one cylinder which is coaxial with the ring and passes within its thickness.

13. Ring consisting of more than one metal according to any one of claims 10 to 12, characterised in that the weld-zone is a weld-zone produced by explosion.

**Ansprüche**

1. Verfahren zur Herstellung von Mehrmetallringen (15-20), das einerseits einen ersten Vorgang zum Erhalten eines Verbundzylinders mit Nuten (10) und ausgebauchten Teilen (11) durch wenigstens teilweise Verformung eines Mehrmetallzylinders, dessen verschiedene Schichten von durch ein Hochenergieschweißverfahren verschweißten Metallzylindern stammen, gegen einen Amboß von allgemeiner Zylinderform umfaßt und andererseits einen Vorgang zum Abschneiden des ausgebauchten Verbundzylinders und einen Bearbeitungsvorgang zur Beseitigung wenigstens eines Teils der Innen- und/oder Außenausbauchung umfaßt, dadurch gekennzeichnet, daß einerseits der Amboß (1 ; 21) eine glatte zylindrische aktive Oberfläche aufweist, wobei das Erhalten des Mehrmetallzylinders durch Verformung an der äußersten Schicht (2 ; 22) dieses Mehrmetallzylinders erfolgt und diese Schicht mit an ihrer äußersten Fläche gegenüber der zylindrischen aktiven Oberfläche des Ambosses angebrachten Grundnuten (5 ; 26-29) versehen ist, und daß andererseits der Bearbeitungsvorgang wenigstens teilweise unmittelbar nach dem Vorgang zum Erhalten des ausgebauchten Verbundzylinders (9 ; 34) und vor dem Abschneidvorgang erfolgt, welch letzterer auf Höhe der Grundnuten (5 ; 26-29) und auf Höhe der keine bemerkenswerten Verformungen erlitten habenden Teile (11) stattfindet.

2. Verfahren nach Anspruch 1, dadurch gekennzeichnet, daß man einen Mehrmetallzylinder (53, 5) verwendet, dessen verschiedene Schichten durch ein Explosionsschweißverfahren verschweißt worden sind.

3. Verfahren nach irgendeinem der Ansprüche 1 und 2, dadurch gekennzeichnet, daß der mit Nuten versehene Mehrmetallzylinder (22, 23, 24) in das Innere des zylindrischen Ambosses (21) eingesetzt wird.

4. Verfahren nach irgendeinem der Ansprüche 1 und 2, dadurch gekennzeichnet, daß der zylindrische Amboß (1) in das Innere des mit Nuten versehenen Mehrmetallzylinders (2, 3) eingesetzt wird.

5. Verfahren nach irgendeinem der vorstehenden Ansprüche, dadurch gekennzeichnet, daß wenigstens eine Nut (5) eine der kumulierten Projektionsdicke der Metallzylinder genau gleiche Tiefe hat.

6. Verfahren nach irgendeinem der vorstehenden Ansprüche, dadurch gekennzeichnet, daß man in einem einzigen Vorgang den Mehrmetallzylinder und den ausgebauchten Verbundzylinder (9 ; 34) aus koaxialen Metallzylindern (2, 3 ; 22, 23, 24) herstellt, wobei der äußerste Metallzylinder (2 ; 22) wenigstens an seiner äußersten Fläche mit Nuten (5 ; 26-29) versehen ist und die anderen Metallzylinder (3 ; 23, 24) Projektionsmetallzylinder sind.

7. Verfahren nach Anspruch 6, dadurch gekennzeichnet, daß man in einem ersten Schritt koaxial einen zylindrischen Amboß (1 ; 21) im Kontakt mit dem Amboß einen Metallzylinder (2 ; 22) mit Nuten an seiner dem zylindrischen Amboß zugewandten Fläche und wenigstens einen anderen Projektionsmetallzylinder (3 ; 23) anordnet und daß man in einem zweiten Schritt das Verschweißen der Projektionsmetallzylinder mit dem mit Nuten versehenen Zylinder mittels eines Hochenergie-Schweißverfahrens vornimmt, das eine ausreichende Energie freisetzt, um auch wenigstens die teilweise Verformung der Nuten zu bewirken und einen ausgebauchten Verbundzylinder (9 ; 34) zu erhalten.

8. Verfahren nach irgendeinem der vorstehenden Ansprüche, dadurch gekennzeichnet, daß auf den Abschneidvorgang eine die dem Abschneidvorgang vorausgehende Bearbeitung vervollständigende Bearbeitung der abgeschnittenen Ringe folgt.

9. Verfahren nach irgendeinem der vorstehenden Ansprüche, dadurch gekennzeichnet, daß die Verformung für wenigstens eine Nut total ist.

10. Mehrmetallring mit wenigstens einer durch ein Hochenergie-Schweißverfahren erhaltenen Schweißzone in Form eines längs zweier zur Achse des Ringes nicht paralleler Ebenen abgeschnittenen Mantels, dadurch gekennzeichnet, daß der Schweißabstand (Fig. 11) derart ist, daß seine Spur auf wenigstens einem zum Ring koaxialen Zylinder und in seiner Dicke verlaufend eine Ellipse ist.

11. Ring nach Anspruch 10, dadurch gekennzeichnet, daß seine Enden in bezüglich der Achse des Ringes schrägen Schneidflächen (Fig. 11) enthalten sind.

12. Mehrmetallring mit wenigstens einer durch ein Hochenergie-Schweißverfahren erhaltenen Schweißzone im Form eines längs zweier zur Achse des Ringes nicht paralleler Ebenen abgeschnittenen Mantels, dadurch gekennzeichnet, daß der Schweißabstand (Fig. 12) derart ist, daß seine Spur auf wenigstens einem zum Ring koaxialen Zylinder und in seiner Dicke verlaufend eine Auszahnung in Mäandern ist.

13. Mehrmetallring nach irgendeinem der Ansprüche 10 bis 12, dadurch gekennzeichnet, daß die Schweißzone eine Explosionsschweißzone ist.

FIG_1

FIG_2

FIG_3

FIG_4

FIG_5

FIG_6

FIG_7

FIG_8

FIG_9

FIG_10

FIG_12

FIG_11